# FASCICULE DE BREVET EUROPEEN

(11) **EP 0 655 190 B1**
(45) Date de publication et mention de la délivrance du brevet: **05.07.2000**
(21) Numéro de dépôt: 95200421.6
(22) Date de dépôt: 02.03.1990
(51) Int. Cl.: A01F 15/08, B30B 9/30, G01N 3/40

(54) **Ramasseuse-presse à balles parallélépipédiques comportant un dispositif de régulation de densité**
Grossballenpresse mit Dichteregelungsvorrichtung
Density regulation device for large-bale press

(30) Priorité: 03.03.1989 FR 8902832
(43) Date de publication de la demande: 31.05.1995
(62) Demande divisionnaire de: 90400582.4
(73) Titulaire: NEW HOLLAND BELGIUM N.V., B-8210 Zedelgem (BE)
(72) Inventeur: Mathis, Michel H., F-85300 Challans (FR)
(74) Mandataire: Vandenbroucke, Alberic

(56) Documents cités:
- EP-A- 0 257 614
- EP-A- 0 346 586

## Description

La présente invention concerne une ramasseuse-presse de fourrage à balles parallélépipèdiques équipée d'un dispositif de régulation de densité des balles.

Dans une presse à balles parallélépipèdiques, comme par exemple illustrée dans le document US-A-4.132.164, la compression du fourrage est assurée à l'aide d'un piston principal entraîné en va-et-vient dans un canal de compression.

Des tranches de fourrage alimentées à partir d'un conduit latéral lors du recul du piston sont ensuite comprimées par le piston entre sa face avant et la partie de balle de fourrage déjà présente dans le canal de compression qui sert ainsi "d'enclume".

L'effort de compression imprimé à la tranche de fourrage est directement lié à l'effort nécessaire au coulissement de la balle à l'intérieur du canal de compression.

Cet effort de coulissement est égal aux forces longitudinales de retenue résultant du frottement de la balle sur les parois du canal de compression.

Cependant, selon les conditions de fonctionnement, les forces de frottement et donc de retenue de la balle peuvent être extrêmement variables, de sorte que les tranches successives sont comprimées de façon inégale, ce qui se traduit par des défauts d'homogénéité dans la balle.

On connaît du document US-A-4.168.659, un dispositif permettant de réguler l'effort de compression, et donc de produire une balle plus homogène.

Les parois du canal de compression sont réalisées partiellement sous la forme de volets pivotants appliqués sous un effort transversal variable sur les faces extérieures de la balle de fourrage afin de produire une force longitudinale de retenue variable et donc influer sur l'effort de compression.

L'effort sur le piston équilibre l'effort de glissement de la balle dans le canal qui est dépendant de l'effort transversal appliqué par les volets et du coefficient de frottement qui transforme l'effort transversal en effort longitudinal.

De plus, il existe un effort dynamique généré par l'accélération de la masse de fourrage comprise dans le canal.

Le but principal pour une presse à fourrage étant de réaliser une compression optimale du produit pour réaliser la compression du fourrage dans les conditions déterminées par l'utilisateur en début de chantier, il faut rechercher la régularité de la densité, donc la régularité de l'effort sur le piston.

Dans les conditions d'utilisation de la machine, il existe de nombreux facteurs qui influent sur le coefficient de frottement (humidité, type de produit, ...), et dans un même chantier, les efforts générés par le piston peuvent être très variables.

Dans le document US-A-4.168.659, les volets pivotants sont mûs par des vérins hydrauliques et l'embiellage du piston principal comporte un montage à excentrique coopérant avec un groupe hydraulique à piston et cylindre destiné d'une part à fournir du fluide sous pression aux vérins et d'autre part à délivrer une pression de commande pour une valve de régulation; cette pression de commande étant fonction de l'effort de compression appliqué par le piston principal.

Un tel arrangement présente divers inconvénients :
- en premier lieu, si l'effort de compression est trop faible, le système n'est pas capable de réagir immédiatement et la montée en pression dans le vérin de volet nécessitera un ou plusieurs autres aller-retour du piston, pendant lesquels les tranches successives seront insuffisamment comprimées.
- en second lieu, en cas de mauvais réglage de la valve de régulation, la chambre de vérin peut être parfois excessivement déchargée.
- enfin, du fait de la double fonction du groupe hydraulique piston-cylindre associé au montage à excentrique de la bielle de piston principal, servant à la fois en tant que source de fluide sous pression et de détecteur de pression, le système présente une hystérésis importante conduisant à des temps de réponse relativement longs. Ainsi, l'effort de compression réellement appliqué par le piston principal peut franchement dépasser le seuil désiré avant que le tiroir de la valve de régulation ne se déplace pour décharger le vérin.

EP-A-0.223.350 concerne une ramasseuse-presse conforme au préambule de la revendication 1. Ce document représente l'état de la technique le plus proche de l'objet de la présente invention qui s'en distingue par les caractéristiques de la partie caractérisante de la revendication 1.

Les détails et avantages de l'invention apparaîtront clairement à la lecture de la description qui va suivre, en se référant aux dessins annexés, dans lesquels :
- la figure 1 est une vue en coupe longitudinale schématique d'une ramasseuse-presse et d'un circuit hydraulique de régulation de densité associé,
- la figure 2 illustre un mode de réalisation de l'invention à commande électronique,
- la figure 3 est un bloc-diagramme d'un circuit électronique du mode de réalisation de la figure 2.

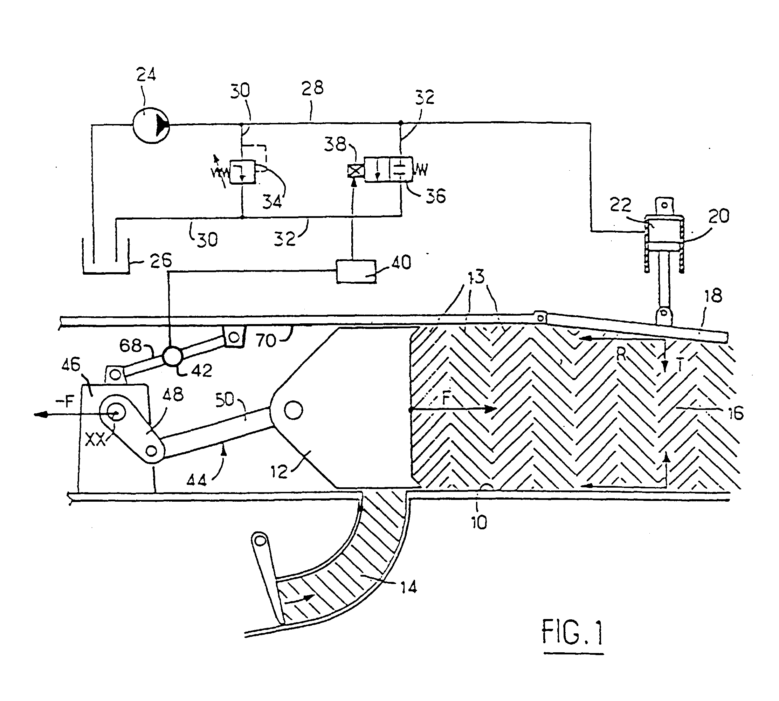

Dans le schéma d'ensemble de la figure 1, on a représenté un canal de compression 10 d'une ramasseuse-presse dont les autres éléments ont été omis afin de simplifier la figure, et pour une description plus complète, on se reportera avantageusement au brevet US-A-4.132.164.

Un piston principal 12 coulisse en va-et-vient dans le canal de compression 10 afin d'y comprimer des tranches 13 successives de fourrage, introduites depuis un conduit latéral 14, et constituer progressivement dans le canal 10 une balle 16 parallélépipèdique.

A chaque avancée, le piston 12 exerce sur la balle 16 un effort de compression F plus ou moins important selon la résistance que la balle 16 rencontre par frottement le long des parois du canal 10.

Afin de faire varier cette résistance et donc réguler l'effort de compression, les parois du canal 10 comprennent au moins un volet 18 articulé entraîné par un vérin 20 de façon à appliquer sur au moins une zone externe de la balle 16 une force transversale T qui, en raison du coefficient de frottement, se traduit par une force longitudinale R de résistance à l'avancement de la balle 16.

La chambre 22 du vérin 20 est raccordée à un circuit hydraulique constitué de la manière suivante :
- une pompe 24 puise du liquide dans un réservoir 26 basse pression pour le refouler dans une conduite haute pression 28 raccordée à la chambre 22 de vérin,
- entre le refoulement de la pompe 24 et le vérin 20, sont prévues deux conduites de dérivation 30, 32,
- la première 30 traverse un limiteur de pression de tout type classique 34 de préférence réglable, destiné à maintenir dans la conduite haute pression 28 une pression de liquide au plus égale à une valeur prédéterminée; ce conduit 30 aboutit ensuite au réservoir 26,
- la seconde traverse un régulateur de pression 36 du type à 2 voies/2 positions rappelé élastiquement vers une position de fermeture dans laquelle le régulateur 36 est fermé et actionné par une tête de manoeuvre 38 vers une position d'ouverture; ce conduit 32 aboutit ensuite également au réservoir 26.

La tête de manoeuvre 38 est commandée par une unité de commande 40 elle-même opérativement associée à un détecteur d'effort de compression 42 agencé indirectement sur l'ensemble de transmission 44 du piston 12; cet ensemble 44 comprenant dans l'exemple illustré un groupe motoréducteur 46 d'axe XX transversal entraînant une manivelle 48 et une bielle 50 montée entre l'extrémité de la manivelle 48 et un point central du piston 12.

Le régulateur 36 est fixé en un endroit stationnaire vis-à-vis de la machine.

La tête de manoeuvre 38 du régulateur 36 comprend un électro-aimant 39, alimenté depuis une source électrique 62, par exemple la batterie d'un véhicule tracteur, par un circuit électrique comprenant un circuit de commutation 78.

Le détecteur d'effort 42 est constitué par un groupe de jauges de contraintes assujetties à un bras 68 de réaction interposé entre le bâti 70 de machine et le groupe motoréducteur 46 d'entraînement de la manivelle 48 de transmission.

Comme on le comprendra, les forces de compression F appliquées par le piston 12 au fourrage se traduisent par des forces de réaction -F opposées sur le groupe motoréducteur 46. Le bras 68, ou tirant, de réaction s'étend généralement dans l'axe du canal de compression 10 afin d'encaisser ces forces de réaction, directement fonction de l'effort de compression.

Les jauges de contraintes sont raccordées à une unité de commande électronique 72 (correspondant à l'unité de commande 40 dans la Figure 1) qui traite le signal reçu des jauges et le compare à un seuil de référence S représentatif d'un effort de compression maximal désiré.

L'unité de commande 72 est reliée à l'électro-aimant 39; elle déclenche l'alimentation (ou la coupure) de ce dernier lorsque le seuil S est dépassé, et coupe (ou établit) l'alimentation lorsque le signal reste au dessous du seuil S.

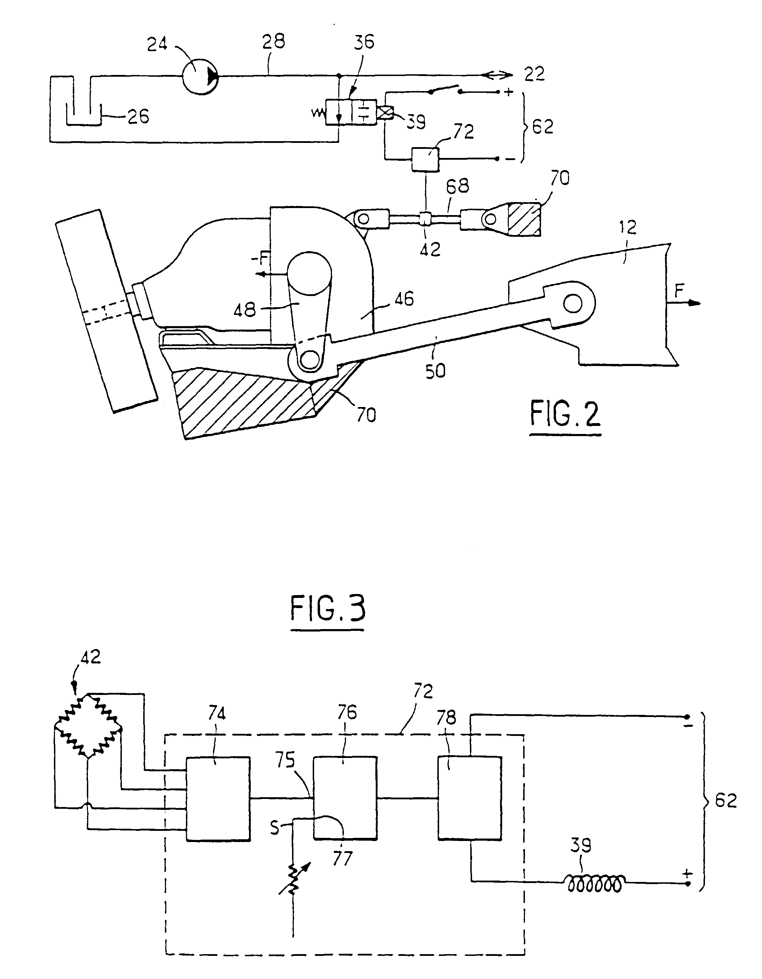

A la figure 3, on a représenté un bloc-diagramme d'une telle unité de commande 72.

Les jauges de contraintes, agencées en "pont", sont raccordées à un circuit de conditionnement et d'amplification 74 de signal, produisant un signal de sortie dont la tension est fonction de l'effort de traction subi par le tirant 68.

Le signal de sortie du circuit de conditionnement et d'amplification 74 est appliqué à l'une 75 des entrées d'un circuit comparateur 76, dont l'autre entrée 77 reçoit le signal de seuil S de tension réglable.

Ainsi, le circuit comparateur 76 délivre en sortie un signal soit de tension prédéterminée lorsque le signal appliqué au comparateur 76 dépasse le signal de seuil S, soit de tension nulle lorsque le signal appliqué au comparateur 76 est inférieur au signal de seuil S.

Ce signal de sortie du comparateur 76 est appliqué au circuit de commutation 78 entre la source de courant 62 et l'électro-aimant 39, afin de provoquer l'alimentation ou la coupure de ce dernier selon le signal appliqué à l'entrée du circuit de commutation 78.

De la sorte, lorsque le circuit comparateur 76 délivre un signal de tension prédéterminée, il commande, par déplacement de la tête de manoeuvre 38, la mise en condition ouverte du régulateur 36. La conduite haute pression 28 et donc la chambre 22 de vérin, sont mises en communication avec le réservoir 26, ce qui réduit la pression dans la chambre 22 de vérin et, par voie de conséquence, la force transversale T exercée par le volet 18 et la force résistante R longitudinale exercée par ce dernier sur la balle 16. La force de compression F est ainsi réduite, jusqu'à ce que le circuit comparateur 76 délivre un signal de tension nulle et que le régulateur 36 revienne à sa condition de fermeture.

On remarque donc que le vérin 20 est constamment alimenté, sous une pression fixée par le limiteur 34, et exerce donc sur la balle 16 une force transversale T permanente de valeur constante. Ce n'est que lorsque le circuit comparateur 76 délivre un signal de tension déterminée suite à un dépassement d'un seuil d'effort de compression F que la chambre 22 de vérin est déchargée afin de réduire la force transversale T jusqu'à ce que l'effort de compression F diminue au dessous du seuil.

Le circuit de commutation 78 peut être soit du type "normalement ouvert", soit du type "normalement fermé".

Dans le premier cas, le circuit de commutation 78 est ouvert lorsque le circuit comparateur 76 délivre un signal de tension nulle, l'électro-aimant 39 n'est pas alimenté et le régulateur 36 reste fermé; la chambre 22 de vérin reste donc alimentée à la pression maximale. Par contre, lorsque le circuit comparateur 76 délivre un signal de tension prédéterminée, le circuit de commutation 78 se ferme et l'électro-aimant 39 est alimenté, ce qui provoque l'ouverture du régulateur 36 et la chute de pression dans le vérin 20.

Dans le second cas, le circuit de commutation 78 est fermé lorsque le circuit comparateur 76 délivre un signal de tension nulle, l'électro-aimant 39 est alimenté et maintient le régulateur 36 en condition fermée, ce dernier étant bien entendu inversé à cette fin; la chambre de vérin 22 reste alimentée à la pression maximale. Par contre, lorsque le circuit comparateur 76 délivre un signal de tension prédéterminée, le circuit de commutation 78 s'ouvre et l'électro-aimant 39 n'est plus alimenté, ce qui provoque l'ouverture du régulateur et la chute de pression dans le vérin 20.

Le mode de réalisation illustré dans les Figures 2 et 3 présente l'avantage que tous les composants du système de contrôle de la densité des balles sont stationnaires par rapport à la machine.

## Revendications

1. Ramasseuse-presse de fourrage à balles parallélépipèdiques comportant :
un bâti (70) ,
un canal de compression (10) dans lequel des tranches successives de fourrage (13) sont introduites; ledit canal de compression (10) étant délimité par des parois ayant au moins un volet articulé (18),
un piston principal (12) entraîné en va-et-vient dans ledit canal de compression (10) afin d'y faire avancer lesdites tranches de fourrage (13); ledit volet (18) pouvant appliquer une résistance réglable au mouvement d'avancement desdites tranches de fourrage (13) grâce à quoi, d'une part, ledit piston (12) comprime lesdites tranches de fourrage (13) pour en constituer des balles et, d'autre part, ledit volet (18) commande la densité desdites balles,
un ensemble de transmission (44) comportant un groupe motoréducteur (46) et destiné à entraîner ledit piston (12) en va-et-vient; ledit groupe motoréducteur (46) étant soumis, pendant les courses de compression du piston (12), à des forces de réaction proportionelles aux forces de compression appliquées par le piston (12) sur les tranches de fourrage (13) présentes dans le canal de compression,
un dispositif de détection (42) des efforts de compression appliqués par ledit piston (12) sur les tranches de fourrage (13) présentes dans ledit canal de compression (10) pendant les courses de compression dudit piston (12); ledit dipositif de détection (42) étant destiné à fournir un signal représentatif desdits efforts de compression,
des moyens hydrauliques (20, 24, 34, 36) destinés à régler automatiquement la position dudit volet (18) en fonction dudit signal afin de commander la densité des balles, et
caractérisée
en ce qu'un bras de réaction, réalisé sous la forme d'un tirant (68), est interposé entre le bâti (70) et le groupe motoréducteur (46) de manière à encaisser lesdites forces de réaction auxquelles le groupe motoréducteur (46) est soumis, et
en ce que le dispositif de détection (42) des efforts de compression est constitué par des jauges de contraintes associées audit bras de réaction (68) de manière à détecter les réactions induites dans ledit tirant (68) par lesdites forces de réaction permettant d'en déduire ledit signal représentatif desdits efforts de compression.

2. Ramasseuse-presse selon la revendication 1, caractérisée en ce que le tirant (68) s'étend généralement dans l'axe du canal de compression (10).

3. Ramasseuse-presse selon la revendication 1 ou 2, caractérisée
en ce qu'il est prévu une unité de commande électronique (40/72) entre les jauges de contraintes (42) et les moyens hydrauliques (20, 24, 34, 36) destinée à commander lesdits moyens hydrauliques (20, 24, 34, 36) en fonction desdites réactions induites dans ledit tirant (68) et
en ce que les jauges de contraintes (42) sont agencées en 'pont' et assujetties au tirant (68); lesdites jauges de contraintes (42) étant raccordées à un circuit de conditionnement et d'amplification (74) de signal faisant parti de l'unité de commande électronique (40/72) et ledit circuit (74) produisant un signal de sortie dont la tension est fonction de la force de réaction subi par le tirant (68).

4. Ramasseuse-presse selon la revendication 3, caractérisée en ce que l'unité de commande électronique (40/72) comprend un circuit comparateur (76) dans lequel le signal reçu du circuit de conditionnement et d'emplification (74) est comparé à un seuil de référence (S) représentatif d'un effort de compression maximal désiré du piston (12); ledit circuit comparateur (76) délivrant en sortie un signal soit de tension prédéterminée lorsque le signal appliqué au circuit comparateur (76) dépasse le signal de seuil (S), soit de tension nulle lorsque le signal appliqué au circuit comparateur (76) est inférieur au signal de seuil (S).

5. Ramasseuse-presse selon la revendication 4, caractérisée en ce que le signal de seuil (S) est de tension réglable.

6. Ramasseuse-presse selon la revendication 5, caractérisée en ce que :
les moyens hydrauliques (20, 24, 34, 36) comportent un vérin hydraulique (20) associé audit volet (18) de sorte que ledit volet (18) applique une force transversale sur au moins une zone externe de la balle (16) en formation dans le canal de compression (10) lorsque ledit vérin hydraulique est allimenté en fluide, et
l'unité de commande électronique (40/72) comprend un circuit de commutation (78) entre une source de courant (62) et les moyens hydrauliques (20, 24, 34, 36); ledit circuit de commutation (78) étant disposé de recevoir le signal de sortie du circuit comparateur (76) et de contrôler les moyens hydrauliques (20, 24, 34, 36) de sorte que, lorsque le circuit comparateur (76) délivre un signal de tension nulle, le vérin hydraulique (20) est alimenté et, lorsque le circuit comparateur (76) délivre un signal de tension prédéterminée, le vérin hydraulique (20) est déchargé.

## Patentansprüche

1. Rechteckballenpresse für Viehfutter, mit:
einem Maschinenrahmen (70),
einem Preßkanal (10), in den aufeinanderfolgende Viehfutter-Portionen (13) eingeführt werden, wobei der Preßkanal (10) durch Wände umgrenzt ist, die zumindest eine gelenkig befestigte Klappe (18) aufweisen,
einem Hauptkolben (12), der hin- und herbeweglich in dem Preßkanal (10) angetrieben wird, um diese Viehfutter-Portionen (13) vorwärtszubewegen, wobei die Klappe (18) einen einstellbaren Widerstand gegen eine Vorwärtsbewegung dieser Viehfutter-Portionen (13) ausüben kann, wodurch einerseits der Kolben (12) diese Viehfutter-Portionen (13) komprimiert, um daraus Ballen zu bilden, und andererseits die Klappe (18) die Dichte der Ballen steuert,
einer Kraftübertragungseinheit (44), die eine Getriebemotoreinheit (46) aufweist und zum Antrieb des Kolbens (12) für eine Hin- und Herbewegung bestimmt ist, wobei die Getriebemotoreinheit (46) während der Kompressionshübe des Kolbens (12) Reaktionskräften ausgesetzt ist, die proportional zu den von dem Kolben (12) auf die Viehfutter-Portionen (13) in dem Preßkanal ausgeübten Kompressionskräften ist,
einer Detektorvorrichtung (42) für die von dem Kolben (12) auf die Viehfutter-Portionen (13) in dem Preßkanal (10) während der Kompressionshübe dieses Kolbens (12) ausgeübten Kompressionskräfte, wobei die Detektorvorrichtung (12) zur Lieferung eines diese Kompressionskräfte darstellenden Signals bestimmt ist,
Hydraulikeinrichtungen (20, 24, 34, 36), die zur automatischen Regelung der Position der Klappe (18) in Abhängigkeit von dem genannten Signal bestimmt sind, um die Dichte der Ballen zu steuern,
dadurch gekennzeichnet, daß
ein Reaktionsarm, der in Form eines Zugstabes (68) ausgebildet ist, zwischen dem Maschinenrahmen (70) und der Getriebemotoreinheit (46) derart angeordnet ist, daß er die Reaktionskräfte aufnimmt, denen die Getriebemotoreinheit (46) ausgesetzt ist, und
die Detektorvorrichtung (42) für die Kompressionskräfte durch Dehnungsmeßfühler gebildet ist, die mit dem Reaktionsarm (68) derart verbunden sind, daß sie die in dem Zugstab (68) durch die Reaktionskräfte hervorgerufenen Reaktionen erfassen und die Ableitung des die Kompressionskräfte darstellenden Signals hieraus ermöglichen.

2. Ballenpresse nach Anspruch 1,
dadurch gekennzeichnet, daß sich der Zugstab (68) allgemein entlang der Achse des Preßkanals (10) erstreckt.

3. Ballenpresse nach Anspruch 1 oder 2,
dadurch gekennzeichnet,
daß eine elektronische Steuereinheit (40/72) zwischen den Dehnungsmeßfühlern (42) und den Hydraulikeinrichtungen (20, 24, 34, 36) vorgesehen und zur Steuerung der Hydraulikeinrichtungen (20, 24, 34, 36) in Abhängigkeit von den in dem Zugstab (68) hervorgerufenen Reaktionen bestimmt ist, und
daß die Dehnungsmeßfühler (42) in Brücke geschaltet und an dem Zugstab (68) befestigt sind, wobei die Dehnungsmeßfühler (42) mit einer Signalaufbereitungs- und Verstärkerschaltung (74) verbunden sind, die einen Teil der elektronischen Steuereinheit (40/72) bildet, und wobei die Schaltung (74) ein Ausgangssignal erzeugt, dessen Spannung eine Funktion der Reaktionskraft ist, der der Zugstab (68) ausgesetzt wird.

4. Ballenpresse nach Anspruch 3,
dadurch gekennzeichnet, daß die elektronische Steuereinheit (40/72) eine Vergleicherschaltung (76) aufweist, in der das von der Aufbereitungs- und Verstärkerschaltung (74) empfangene Signal mit einem Bezugs-Schwellenwert (S) verglichen wird, der eine maximal gewünschte Kompressionskraft des Kolbens (12) darstellt, wobei die Vergleicherschaltung (76) am Ausgang ein Signal liefert, das eine vorgegebene Spannung aufweist, wenn das der Vergleicherschaltung (76) zugeführte Signal das Schwellenwertsignal (S) übersteigt, oder das eine Spannung von 0 hat, wenn das der Vergleicherschaltung zugeführte Signal unter dem Schwellenwertsignal (S) liegt.

5. Ballenpresse nach Anspruch 4,
dadurch gekennzeichnet, daß das Schwellenwertsignal (S) eine einstellbare Spannung aufweist.

6. Ballenpresse nach Anspruch 5,
dadurch gekennzeichnet, daß:
die Hydraulikeinrichtungen (20, 24, 34, 36) einen Hydraulikzylinder (20) aufweisen, der mit der Klappe (18) derart verbunden ist, daß die Klappe (18) eine Querkraft auf zumindest einen Außenbereich des in dem Preßkanal (10) in Bildung befindlichen Ballens (16) ausübt, wenn der Hydraulikzylinder mit Strömungsmittel gespeist wird, und
die elektronische Steuereinheit (40/72) einen Schalterkreis (78) zwischen einer Stromquelle (62) und den Hydraulikeinrichtungen (20, 24, 34, 36) aufweist, wobei der Schalterkreis (78) so angeordnet ist, daß er das Ausgangssignal der Vergleicherschaltung (76) empfängt und die Hydraulikeinrichtungen (20, 24, 34, 36) derart steuert, daß wenn die Vergleicherschaltung (76) ein Signal mit der Spannung 0 liefert, der Hydraulikzylinder (20) gespeist wird, während, wenn die Vergleicherschaltung (76) ein Signal mit einer vorgegebenen Spannung liefert, der Hydraulikzylinder (20) entlastet wird.

## Claims

1. Pick-up baler including:
a frame (70),
a compression duct (10) into which successive wads of fodder (13) are introduced, said compression duct (10) being delimited by walls having at least one articulated flap (18),
a main plunger (12) driven to-and-fro in said compression duct (10) in order to move said wads of fodder (13) forwards therein, said flap (18) being able to apply a variable resistance to the forward movement of said wads of fodder (13) whereby, on the one hand, said plunger (12) compresses said wads of fodder (13) to constitute bales therefrom and, on the other hand, said flap (18) controls the density of said bales,
a transmission system (44) including a gear motor (46) to drive said plunger (12) to-and-fro, said gear motor (46) being subjected, during compression strokes of the plunger (12), to reaction forces proportional to the compression forces applied by the plunger (12) to the wads of fodder (13) present in the compression duct,
a device (42) for detecting compression forces applied by said plunger (12) to the wads of fodder (13) present in said compression duct (10) during the compression strokes of said plunger (12), said detector device (42) being adapted to supply a signal representative of said compression forces, and
hydraulic means (20, 24, 34, 36) adapted to adjust automatically the position of said flap (18) as a function of said signal in order to control the density of the bales,
characterized in that:
a reaction arm in the form of a tie rod (68) is disposed between the frame (60) and the gear motor (46) to take up said reaction forces on the gear motor (46), and
the compression force detector device (42) consists of strain gauges associated with said reaction arm (68) in such a manner as to detect reaction forces induced in said tie rod (68) by said reaction forces, enabling said compression forces to be deduced therefrom.

2. Pick-up baler according to claim 1, characterized in that the tie rod (68) extends generally along the axis of the compression duct (10).

3. Pick-up baler according to claim 1 or claim 2, characterized in that:
an electronic control unit (40/72) is provided between the strain gauges (42) and the hydraulic means (20, 24, 34, 36) and is adapted to control said hydraulic means (20, 24, 34, 36) as a function of said reaction forces induced in said tie rod (68), and
the strain gauges (42) are connected in a "bridge" and acted on by the tie rod (68), said strain gauges (42) being connected to a signal conditioning and amplifier circuit (74) forming part of the electronic control unit (40/72) and said circuit (74) producing an output signal whose voltage is a function of the reaction force exerted on the tie rod (68).

4. Pick-up baler according to claim 3, characterized in that the electronic control unit (40/72) comprises a comparator circuit (76) in which the signal received from the signal conditioning and amplifier circuit (74) is compared to a reference threshold (S) representative of a maximum required compression force of the plunger (12), said comparator circuit (76) delivering at its output a signal either at a predetermined voltage if the signal applied to the comparator circuit (76) is above the threshold signal (S) or at a zero voltage if the signal applied to the comparator circuit (76) is below the threshold signal (S).

5. Pick-up baler according to claim 4, characterized in that the threshold signal (S) is of variable voltage.

6. Pick-up baler according to claim 5, characterized in that:
the hydraulic means (20, 24, 34, 36) include a hydraulic ram (20) associated with said flap (18) so that said flap (18) applies a transverse force to at least one external area of the bale (16) being formed in the compression duct (10) when said hydraulic ram is supplied with fluid, and
the electronic control unit (40/72) comprises a switching circuit (78) between a power supply (62) and the hydraulic means (20, 24, 34, 36), said switching circuit (78) being disposed to receive the output signal of the comparator circuit (76) and to control the hydraulic means (20, 24, 34, 36) so that the hydraulic ram (20) is pressurized if the comparator circuit (76) delivers a signal at a zero voltage and the hydraulic ram (20) is depressurized if the comparator circuit (76) delivers a signal at a predetermined voltage.
